# EUROPÄISCHE PATENTSCHRIFT

(11) **EP 1 597 135 B1**
(45) Veröffentlichungstag und Bekanntmachung des Hinweises auf die Patenterteilung: **05.07.2017**
(21) Anmeldenummer: 04709129.3
(22) Anmeldetag: 07.02.2004
(51) Int. Cl.: C21D 9/48, B62D 29/00, C22C 38/58, B21D 22/00, B21D 37/16, B62D 25/00, B60R 16/06, H01R 4/64

(54) **VORDER- ODER HINTERWAGEN EINER FAHRZEUGKAROSSERIE UND SEINER MASSEBOLZEN**
FRONT OR REAR VEHICLE BODY AND ITS GROUNDING BOLT
CARROSSERIE AVANT OU ARRIERE D'UN VEHICULE ET SA PRISE DE MASSE

(30) Priorität: 27.02.2003 DE 10308423
(43) Veröffentlichungstag der Anmeldung: 23.11.2005
(73) Patentinhaber: Bayerische Motoren Werke Aktiengesellschaft, 80809 München (DE)
(72) Erfinder: SAMMER, Klaus, 84333 Malgersdorf (DE); HAENLE, Udo, 85232 Bergkirchen (DE); GIESE, Volker, 80337 München (DE); MIESLINGER, Stefan, 84034 Landshut (DE); KIRSCHNER, Robert, 82140 Olching (DE); MANTEI, Ingo, 80939 München (DE)
(86) Internationale Anmeldenummer: PCT/EP2004/001133
(87) Internationale Veröffentlichungsnummer: WO 2004/076266

(56) Entgegenhaltungen:
- EP-A- 0 897 356
- EP-A- 0 897 356
- EP-A- 1 264 911
- EP-A- 1 439 240
- DE-A- 19 902 665
- DE-A- 19 902 665
- US-A- 3 159 419
- US-A- 5 750 236
- ANONYMOUS: "Nirosta H400 - Austenitischer nichtrostender Stahl mit höchster Festigkeit" INTERNET ARTICLE, [Online] Juni 2000 (2000-06), XP002287749 Gefunden im Internet: URL:http://www.nirosta.de/fileadmin/media/ PDF/H400.pdf> [gefunden am 2004-07-07]
- ANONYMOUS: "AK Steel Nitronic 30 stainless steel" PRODUCT DATA BULLETIN UNS S20400, [Online] 2000, XP002287750 Gefunden im Internet: URL:http://www.aksteel.com/pdf/markets_pro ducts/stainless/austenitic/Nitronic_30_Dat a_Bulletin.pdf> [gefunden am 2004-07-07]
- ANONYMOUS: "Nirosta H400 - Austenitischer nichtrostender Stahl mit höchster Festigkeit" INTERNET ARTICLE, [Online] Juni 2000 (2000-06), XP002287749 Gefunden im Internet: URL:http://www.nirosta.de/fileadmin/media/ PDF/H400.pdf> [gefunden am 2004-07-07]
- ANONYMOUS: "AK Steel Nitronic 30 stainless steel" PRODUCT DATA BULLETIN UNS S20400, [Online] 2000, XP002287750 Gefunden im Internet: URL:http://www.aksteel.com/pdf/markets_pro ducts/stainless/austenitic/Nitronic_30_Dat a_Bulletin.pdf> [gefunden am 2004-07-07]

## Beschreibung

Die Erfindung betrifft einen Vorder- oder Hinterwagen, eine Bodenbaugruppe oder eine Seitenwand einer Fahrzeugkarosserie.

In der Automobilindustrie werden für Karosseriekomponenten von Kraftfahrzeugen bevorzugt unlegierte und niedriglegierte Stähle sowie Leichtmetallwerkstoffe eingesetzt. Hierbei stellen unlegierte und niedriglegierte Stähle einen Kompromiss zwischen der Umformbarkeit und der Streckgrenze des Werkstoffs dar, da mit steigender Streckgrenze im allgemeinen die Umformbarkeit des Werkstoffs sinkt und die nach einer Kaltumformung verbleibende Restbruchdehnung verringert wird. Komplexe Geometrien lassen sich entsprechend nur bei niedrigen Materialgüten herstellen. Deshalb muss in hochbelasteten Strukturbereichen die Materialdicke angehoben werden, oder es müssen mehrere einzelne Bauteile verwendet werden. Bei Außenhautbauteilen einer Fahrzeugkarosserie kann aus Gründen der Beulsteifigkeit die Blechdicke nicht weiter reduziert werden.

Die im Automobilbereich eingesetzten Leichtmetallwerkstoffe wie Aluminium ermöglichen im Vergleich zur bisher üblichen Stahlkonstruktion eine Gewichtsreduzierung und weisen eine erhöhte Korrosionsbeständigkeit auf. Ihr Einsatz bei der Herstellung von Karosseriebauteilen erfordert jedoch nicht unerhebliche, teilweise aufwendige konstruktive Änderungen an der Bauteilgestaltung.

Aus der DE 199 02 665 A1 ist eine spezielle Edelstahllegierung bekannt, die gegenüber den bisher eingesetzten unlegierten und niedriglegierten Stählen wesentliche Vorteile aufweist. Sie ist besonders geeignet als Ausgangswerkstoff für Rohre, Bleche und Profile, aus denen Achsträger, Verbundlenkerachsen, Lenker, Deformationselemente, Säulen und Säulenverstärkungen, Stoßfänger, Türaufprallträger oder Seitenschutzelemente umformtechnisch hergestellt werden. Als besonders vorteilhaft wird eine Edelstahllegierung mit einem austenitisch-ferritischen Mischgefüge angesehen.

Ferner ist aus dem Artikel "Nirosta 400 - Austenitischer nichtrostender Stahl mit höchster Festigkeit", der im Internet unter http://www.nirosta.de/fileadmin/media/PDF/H400.pdf veröffentlicht worden war, eine Edelstahlsorte bekannt.

Aufgabe der Erfindung ist es, Teile einer Fahrzeugkarosserie zu schaffen, die ein sehr gutes Crash- und Festigkeitsverhalten bei einem geringen Eigengewicht aufweisen.

Diese Aufgabe wird durch die Merkmale des Patentanspruchs 1 gelöst.

Die Anforderungen an den heutigen Karosseriebau, ein möglichst geringes Gewicht der Karosserie bei einem guten Crash- und Festigkeitsverhalten sicherzustellen, haben verstärkt zum Einsatz von hoch- und höchstfesten Stählen geführt. Diese weisen allerdings nachteiligerweise nur eine stark begrenzte Umformbarkeit auf. Edelstahl ist gegenüber hochfesten Stählen besser umformbar und weist bei geringeren Blechdicken vergleichbare Festigkeitseigenschaften auf. Edelstahl ist prädestiniert für Bauteile, die bei einem Crash auf hohem Energieniveau stark verformbar sein sollen, die streckgrenzen-dimensioniert sind, und an die keine sehr hohen Steifigkeitsanforderungen gestellt werden. Dagegen ist der Einsatz von Edelstahl bei Bauteilen, die nur hohe Steifigkeitsanforderungen erfüllen müssen, weniger sinnvoll, da hier keine oder nur sehr geringe Gewichtsreduzierungen gegenüber herkömmlichen Stählen möglich sind.

Gemäß Patentanspruch 1 weist bei einer Fahrzeugkarosserie ein Vorder- oder Hinterwagen in Mischbauweise zumindest ein Strukturbauteil aus Edelstahl auf, das in einem Blechumformverfahren hergestellt wurde. Ein Strukturbauteil ist ein essentielles Bauteil einer Fahrzeugkarosserie, das tragende Funktion hat und / oder Kräfte weiterleiten kann. Beplankungsteile haben dagegen nur verkleidenden Charakter und zählen daher nicht zu den Strukturbauteilen. Typische Blechumformverfahren sind beispielsweise Tiefziehen, Kanten, Innenhochdruckumformen und Rollformen.

Das Strukturbauteil kann insbesondere ein Motorträger oder ein Hecklängsträger sein. Sowohl ein Motorträger als auch ein Hecklängsträger müssen sich bei einem Crash gezielt deformieren lassen. Als wesentliches tragendes Bauteil weisen sie eine komplexe Geometrie auf und die Dimensionierung, wie beispielsweise die Wahl der Wandstärke, erfolgt nur unter Festigkeitsgesichtspunkten. Insbesondere ein Hecklängsträger weist meist eine sehr komplexe Geometrie auf, sodass hier die Vorteile von Edelstahl noch deutlicher zu Tage treten. Als Strukturbauteil aus Edelstahl sind darüber hinaus auch Federbeinaufnahmen geeignet.

Der Einsatz eines streckgrenzendimensionierten Trägers aus Edelstahl in Mischbauweise in einem ansonsten konventionell aufgebauten Vorder- bzw. Hinterwagen ist dabei deutlich kostengünstiger als wenn der gesamte Vorder- bzw. Hinterwagen aus einem Leichtmetall besteht. Der Gewichtsvorteil durch den Edelstahlträger ist dabei dennoch annähernd vergleichbar mit einem Vorder- bzw. Hinterwagen aus einem Leichtmetall. Durch die gezielte Gewichtsreduzierung des Vorder- bzw. Hinterwagens ist aber nicht nur eine allgemeine Gewichtsreduzierung der Fahrzeugkarosserie möglich, sondern auch unterschiedliche Achslasten auf die vordere und die hintere Achse können durch eine gezielte Gewichtsreduzierung nur im Vorderwagen oder nur im Hinterwagen ausgeglichen werden.

Edelstahl ist gegenüber normalen Stählen der edlere Werkstoff in der elektrochemischen Spannungsreihe. Da beim Vorder- oder Hinterwagen nur wenige Strukturbauteile aus Edelstahl sind, gibt es normalerweise mehrere Kontaktstellen dieser Strukturbauteile aus Edelstahl mit dem übrigen Vorder- oder Hinterwagen oder mit der übrigen Bodenbaugruppe, die meist aus unedleren Stählen bestehen. Dadurch besteht die Gefahr einer Kontaktkorrosion bei den unedleren Stählen.

Diesem Problem kann mit einer Hohlraumkonservierung, Verklebung oder Abdichtung der Mischbaustelle bzw. durch Verzinkung oder Eloxierung des Edelstahls begegnet werden.

Die Integration der Edelstahlstrukturbauteile in eine Karosserie aus unedleren Stählen kann auch durch Adapterbleche erfolgen, die durch eine der oben genannte Maßnahmen mit dem Edelstahlbauteil verbunden sind, und mit dem restlichen Vorder- oder Hinterwagen oder der restlichen Bodenbaugruppe auf konventionelle Weise verbunden werden. Dazu wird beispielsweise an dem Strukturbauteil im Verbindungsbereich zumindest ein flächiger Adapter angebracht, der mit dem restlichen Vorder- oder Hinterwagen oder der restlichen Bodenbaugruppe überlappt und im Überlappungsbereich mit diesem verbunden werden kann.

Bevorzugt ist zumindest ein Adapter mit dem Strukturbauteil stanzgenietet, punktverschweißt, verklebt, geclincht, gebördelt oder mit einer Kombination dieser Fügeverfahren verbunden. Bei einer Klebeverbindung befindet sich idealerweise zwischen dem Adapter und dem Strukturbauteil flächig Klebstoff, sodass diese nicht miteinander direkt in Berührung kommen. Der frisch angeklebte Adapter kann zusätzlich mit dem Strukturbauteil mit Stanznieten oder durch Punktschweißungen verbunden werden. Dies erhöht die Festigkeit der Verbindung und ermöglicht eine weitere Verarbeitung des Strukturbauteils mit dem Adapter, auch wenn der Klebstoff noch nicht vollständig ausgehärtet ist. Großflächige Verschweißungen sollten vermieden werden, da die Festigkeit des Edelstahls durch die Wärmeeinbringung beim Schweißen bei den Schweißpunkten deutlich abnimmt.

An dem Strukturbauteil ist ein Massebolzen angebracht, der aus einem Werkstoff besteht, der mindestens so edel ist, wie der Werkstoff des Strukturbauteils. Anderenfalls korrodiert der Massebolzen innerhalb kürzester Zeit und kann seine Funktion nicht mehr voll erfüllen.

Der verwendete Edelstahl weist nach dem Umformen zumindest teilweise ein martensitisches Gefüge auf. Ein martensitisches Gefüge bildet sich durch eine diffusionslose Umwandlung des Austenits. Die Kristallstruktur ist wie beim Ferrit kubisch-raumzentriert. Sie ist aber im Gegensatz zum Ferrit an Kohlenstoff übersättigt. Daraus resultiert eine Härtezunahme.

Der verwendete Edelstahl ist günstigerweise nickelarm, wobei der Nickelgehalt bevorzugt kleiner als sechs Gewichtsprozente ist. Nickel ist ein Schwermetall, das zur Stahlveredelung eingesetzt wird. Geringe Nickelzusätze erhöhen im Stahl die Korrossionsbeständigkeit, die Härte und die Zähigkeit. Allerdings ist Nickel in der Gewinnung relativ teuer. Aus Kostengründen wird daher ein nickelarmer Edelstahl bevorzugt verwendet.

Ein gut geeigneter Edelstahl ist der Edelstahl H400, wie beispielsweise der NIROSTA H400 von Krupp Thyssen. Der H400 hat eine starke Neigung zur Kaltverfestigung, sodass sich schon mit geringen Verformungsgraden erhebliche Festigkeitssteigerungen erzielen lassen. Die starke Kaltverfestigung bewirkt zudem eine sehr hohe Energieaufnahme im Crash. H400 ist sowohl kalt als auch warm gut umformbar.

Edelstahl weist beim Umformen ein stark abrasives bzw. adhäsives Verhalten auf. Daher wird das Strukturbauteil bevorzugt aus einer Platine aus Edelstahl umgeformt, die eloxiert, eloverzinkt oder feuerverzinkt ist. Durch die Zink- oder Eloxalschicht sowie einen eventuellen Einsatz von Schmierstoffen kommt der eigentliche Edelstahl beim Umformen praktisch nicht direkt mit dem Werkzeug in Berührung, sodass das abrasive bzw. adhäsive Verhalten kein Problem mehr darstellt. Zudem haftet eine Lack- oder Klebstoffschicht auf der Zink- oder Eloxalschicht gut, während auf ein unbeschichtetes Edelstahlbauteil vor dem Lackieren oder Verkleben eine Textur bespielsweise durch Strahlen aufgebracht werden muss, um eine gute Haftung der Lackschicht sicherstellen zu können.

Aufgrund der hohen Kaltverfestigung von Edelstahl ist zur Umformung viel Energie erforderlich, wodurch eine große Menge an Wärme entsteht. Für eine Massenfertigung von Bauteilen mit möglichst kleinen Toleranzen muss daher diese Wärme abgeführt werden, um eine konstante Umformtemperatur und somit eine gleichbleibende Bauteilqualität bzw. eine hohe Prozesssicherheit gewährleisten zu können. Ein Umformwerkzeug zum Umformen der Platine aus Edelstahl zu einem der Strukturbauteile weist daher vorteilhafterweise temperierbare Stempel und / oder Matrizen und / oder Blechniederhalter auf. Alternativ oder auch zusätzlich kann auch die Platine vor der Verformung temperiert werden, um den Umformprozess zu steuern.

Bereits nach einem ersten Umformschritt ist die Kaltverfestigung so hoch, dass in einem weiteren Umformschritt nur mehr eine minimale Umformung möglich wäre. Daher wird vorteilhafterweise das Strukturbauteil in einem einzigen Umformschritt vollständig umgeformt.

Als Schmiermittel haben sich Trockenschmierstoffe bewährt. Die Schmiermittel müssen allerdings nach dem Umformen in Abhängigkeit von der Auftragsmenge abgewaschen werden, da diese die Aufbringung von Beschichtungen und / oder Lacken ansonsten behindern.

In der Zeichnung ist ein Ausführungsbeispiel der Erfindung dargestellt, anhand dessen die Erfindung im Folgenden näher beschrieben wird. Die einzelnen Figuren zeigen in schematischer Darstellungsweise:
- Fig. 1: eine perspektivische Ansicht einer Fahrzeugkarosserie und
- Fig. 2: eine perspektivische Ansicht eines Seitenrahmens.

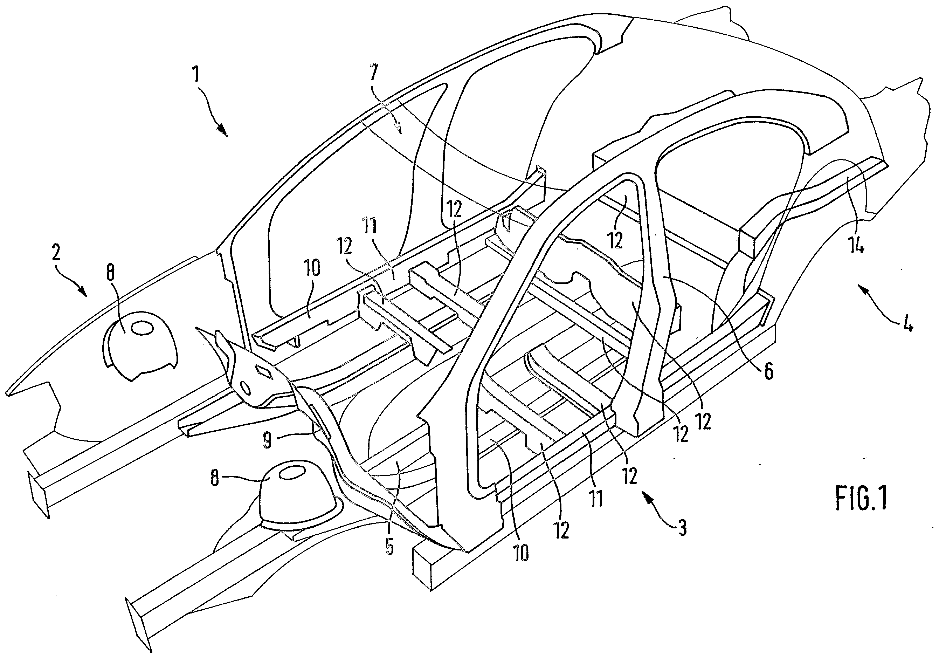

In Fig. 1 ist eine Karosserie 1 eines Personenkraftwagens dargestellt. Die Karosserie 1 lässt sich unterteilen in einen Vorderwagen 2, eine Fahrgastzelle 3 und einen Hinterwagen 4. Die Fahrgastzelle 3 wiederum weist eine Bodenbaugruppe 5, eine linke und eine rechte Seitenwand 6 und ein Dach 7 auf.

Beim Vorderwagen 2 bestehen die beiden Federbeinaufnahmen 8 und ein vorderer Querträger 9 aus Edelstahl, während der restliche Vorderwagen 2 aus konventionellen unedleren Stahlsorten besteht. Bei der Bodenbaugruppe 5 bestehen die Längsträger 10, die sich von den Federbeinaufnahmen 8 annähernd unter der ganzen Fahrgastzelle 3 entlang erstrecken, aus Edelstahl. Des weiteren sind die Schweller 11 und zusätzliche Querträger 12 der Bodenbaugruppe 5 aus Edelstahl.

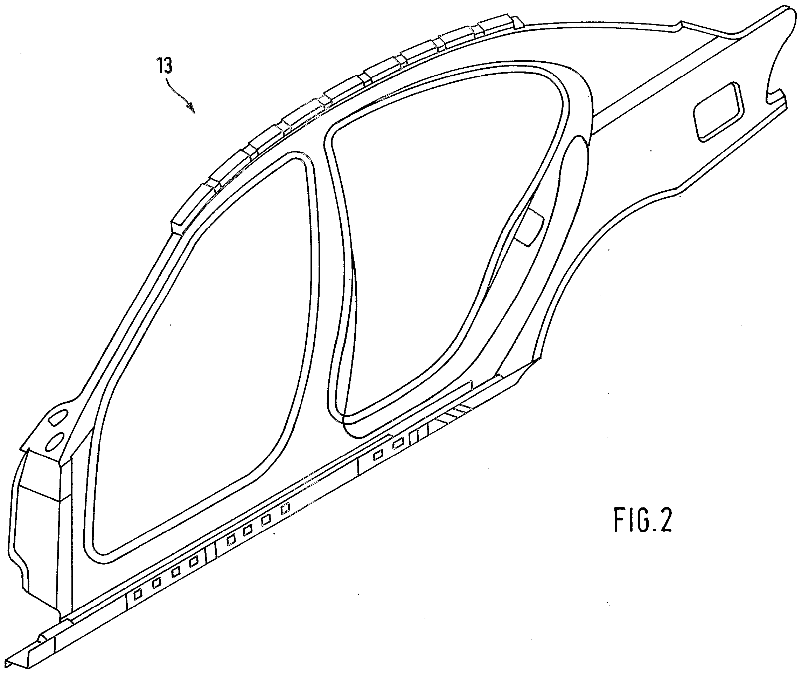

Die restliche Bodenbaugruppe 5 besteht aus unedleren Stahlsorten. Die linke und die rechte Seitenwand 6 sind in Schalenbauweise jeweils aus einer inneren und einer äußeren Seitenwand aufgebaut. Die äußere Seitenwand 13 ist in Fig. 2 dargestellt und besteht ebenfalls aus Edelstahl. Sie dient zumindest im Bereich der Fahrgastzelle als Strukturbauteil und erstreckt sich einteilig von der A-Säule bis über das hintere Radhaus hinaus. Beim Hinterwagen 4 bestehen die Hecklängsträger 14 aus Edelstahl, der restliche Hinterwagen ist aus unedlerem Stahl.

Somit bestehen vor allem Bauteile 8 bis 14 aus Edelstahl, die aufgrund ihrer Größe einen erheblichen Beitrag zum Gesamtgewicht der Fahrzeugkarosserie 1 leisten, und die streckgrenzendimensioniert sind. Die Festigkeit ist bei diesen Bauteilen 8 bis 14 von größerer Bedeutung als die Steifigkeit. Das Gesamtgewicht der Fahrzeugkarosserie 1 ist deutlich geringer, als bei vergleichbaren Fahrzeugkarosserie, bei der die entsprechenden Bauteile 8 bis 14 aus höher- und höchstfesten Stählen bestehen. Die äußere Seitenwand 13 ist zwar als einzelnes Bauteil kaum leichter, aber weist eine sehr viel höhere Festigkeit auf, sodass ansonsten erforderliche Verstärkungsteile teilweise entfallen können. Gegenüber einer Karosserie, bei der der Vorder- und / oder Hinterwagen 2 und / oder 4 komplett aus einem Leichtmetall, wie beispielsweise einer Aluminiumlegierung besteht, ergeben sich bei der erfindungsgemäßen Mischbauweise des Vorder- und / oder Hinterwagens 2 und / oder 4 aus Edelstahl und unedleren Stahlsorten deutliche Kostenvorteile.

Alle Bauteile 8 bis 14 sind Blechumformteile aus Edelstahlplatinen der Sorte H400. Aufgrund der hohen Kaltverfestigung des Edelstahls H400 weisen die Bauteile 8 bis 14 hohe energieabsorbierende Eigenschaften bei einer Verformung bei einem Crash auf. Damit weist beispielsweise der Hecklängsträger 14 wesentlich bessere Crasheigenschaften als ein vergleichbarer Hecklängsträger aus einem höherfesten Stahl auf. Zudem ist der mögliche Umformgrad von H400 deutlich größer als bei höher- und höchstfesten Stahlsorten. Damit lassen sich aus Edelstahl auch noch Bauteile mit einer Geometrie darstellen, die aus höher- und höchstfesten Stahlsorten nicht mehr herstellbar sind.

Allerdings sind zum Umformen von Edelstahl sehr hohe Kräfte erforderlich. Bei der plastischen Umformung entsteht daraus zum Teil Wärme. Bei einem Ziehwerkzeug für eine Serienproduktion sollte diese Wärme durch eine temperierte Matrize und / oder einen temperierten Stempel und / oder einen temperierten Blechniederhalter abgeführt werden. Anderenfalls weisen die ersten Bauteile, die mit einem noch kalten Werkzeug umgeformt werden, andere Toleranzstreuungen auf, als die Bauteile, die später mit einem warmen Werkzeug umgeformt werden.

Die Mischbauweise birgt die Gefahr einer Kontaktkorrosion zwischen Edelstahl und den angrenzenden unedleren Stahlsorten. Deshalb sollten Kontaktstellen im Nassbereich vermieden werden. Entsprechend sollten derartige Kontaktstellen beispielsweise mit einer Hohlraumkonservierung, einer Verklebung oder einer Abdichtung versehen werden, sodass kein Wasser an die Kontaktstellen kommen kann. Zur Verbindung der Bauteile 8 bis 14 aus Edelstahl mit den angrenzenden unedleren Stahlbauteilen ist eine Klebeverbindung gut geeignet, die mit Stanzniet-, Clinch- oder Punktschweißverbindungen kombiniert wird. Die Klebstoffschicht verhindert über große Teile des Kontaktbereichs einen direkten Kontakt der Bauteile miteinander. Die Stanzniet-, Clinch- oder Punktverschweißverbindung fixieren die beiden Bauteile zueinander während der Aushärtezeit des Klebstoffs. Außerdem sind die Bauteile aus Edelstahl so durch die beim Schweißen eingeleitete Wärme nur an wenigen punktuellen Stellen geschwächt.

## Patentansprüche

1. Vorder- oder Hinterwagen einer Fahrzeugkarosserie, wobei der Vorder- oder Hinterwagen zumindest ein Strukturbauteil (8, 9, 14) aus Edelstahl aufweist, das in einem Blechumformverfahren hergestellt wurde, wobei der Edelstahl nach dem Umformen zumindest teilweise ein martensitisches Gefüge aufweist, **dadurch gekennzeichnet, dass** der Vorder- oder Hinterwagen (2 oder 4) in Mischbauweise gebaut ist, und dass an dem Strukturbauteil (8, 9, 14) ein Massebolzen angebracht ist, der aus einem Werkstoff besteht, der mindestens so edel ist, wie der Werkstoff des Strukturbauteils (8, 9, 14).

2. Vorder- oder Hinterwagen nach Anspruch 1, **dadurch gekennzeichnet, dass** das Strukturbauteil ein Motorträger oder ein Hecklängsträger (14) ist.

3. Vorder- oder Hinterwagen nach einem der vorhergehenden Ansprüche, **dadurch gekennzeichnet, dass** das Strukturbauteil (8, 9, 14) nur indirekt über zumindest einen Adapter mit dem restlichen Vorder- oder Hinterwagen (2 oder 4) verbunden ist, wenn dieser oder diese aus einem unedleren Werkstoff gemäß der elektrochemischen Spannungsreihe besteht.

4. Vorder- oder Hinterwagen nach Anspruch 3, **dadurch gekennzeichnet, dass** zumindest ein Adapter mit dem Strukturbauteil (8, 9, 14) stanzgenietet, punktverschweißt, verklebt, geclincht, gebördelt oder mit einer Kombination dieser Fügeverfahren verbunden ist.

5. Vorder- oder Hinterwagen nach einem der vorhergehenden Ansprüche, **dadurch gekennzeichnet, dass** der Edelstahl nickelarm ist.

6. Vorder- oder Hinterwagen nach einem der vorhergehenden Ansprüche, **dadurch gekennzeichnet, dass** das Strukturbauteil (8, 9, 14) aus einer Platine aus Edelstahl umgeformt wurde, die eloxiert oder verzinkt ist.

## Claims

1. A front or rear end of a vehicle body, wherein the front or rear end has at least one structural component (8, 9, 14) made of high-grade steel which has been produced in a sheet-metal forming process, wherein the high-grade steel after the forming has at least partially a martensitic structure, **characterised in that** the front or rear end (2 or 4) is of mixed construction, and **in that** an earthing bolt which consists of a material which is of at least as high a grade as the material of the structural component (8, 9, 14) is attached to the structural component (8, 9, 14).

2. A front or rear end according to Claim 1, **characterised in that** the structural component is an engine bracket or a rear side member (14).

3. A front or rear end according to one of the preceding claims, **characterised in that** the structural component (8, 9, 14) is connected only indirectly via at least one adapter to the rest of the front or rear end (2 or 4) if the adapter(s) consist(s) of a lower-grade material according to the electrochemical series.

4. A front or rear end according to Claim 3, **characterised in that** at least one adapter is punch-riveted, spot-welded, glued, clinched, flanged or connected with a combination of these joining methods to the structural component (8, 9, 14).

5. A front or rear end according to one of the preceding claims, **characterised in that** the high-grade steel is a low-nickel one.

6. A front or rear end according to one of the preceding claims, **characterised in that** the structural component (8, 9, 14) is formed from a blank of high-grade steel which is anodised or zinc-plated.

## Revendications

1. Partie avant ou partie arrière d'une carrosserie de véhicule, cette partie avant ou cette partie arrière comprenant au moins un composant de structure (8, 9, 14) en acier spécial qui a été obtenu par un procédé de formage de tôle, après le formage, l'acier spécial ayant au moins partiellement une structure martensitique,
**caractérisée en ce que**
la partie avant ou la partie arrière (2 ou 4) est réalisée selon un mode de construction mixte, et, sur le composant de structure (8, 9, 14) est monté un boulon à la masse qui est réalisé en un matériau qui est au moins aussi noble que le matériau constitutif du composant de structure (8, 9, 14).

2. Partie avant ou partie arrière conforme à la revendication 1, **caractérisée en ce que**
le composant de structure est un support de moteur ou un support longitudinal arrière (14).

3. Partie avant ou partie arrière conforme à l'une des revendications précédentes,
**caractérisée en ce que**
le composant de structure (8, 9, 14) n'est relié qu'indirectement au reste de la partie avant ou de la partie arrière (2 ou 4) par l'intermédiaire d'un adaptateur lorsque celle(s)-ci est(sont) réalisée(s) en un matériau non noble selon les valeurs de tension électrochimique.

4. Partie avant ou partie arrière conforme à la revendication 3, **caractérisée en ce qu'**
au moins un adaptateur est relié au composant de structure (8, 9, 14) par rivetage, estampage, soudage par point, collage, clinchage, sertissage, ou une combinaison de ces procédés d'assemblage.

5. Partie avant ou partie arrière conforme à l'une des revendications précédentes,
**caractérisée en ce que**
l'acier spécial est pauvre en nickel.

6. Partie avant ou partie arrière conforme à l'une des revendications précédentes,
**caractérisée en ce que**
le composant de structure (8, 9, 14) a été mis en forme à partir d'une platine en acier spécial anodisée ou galvanisée.
